(19) **Europäisches Patentamt**
**European Patent Office**
**Office européen des brevets**

(11) **EP 3 359 915 B1**

(12) **FASCICULE DE BREVET EUROPEEN**

(45) Date de publication et mention de la délivrance du brevet:
**25.12.2019 Bulletin 2019/52**

(21) Numéro de dépôt: **16793957.8**

(22) Date de dépôt: **10.10.2016**

(51) Int Cl.:
*G01C 21/16* *(2006.01)*   *G01C 21/20* *(2006.01)*
*G01C 22/00* *(2006.01)*   *G01C 21/12* *(2006.01)*

(86) Numéro de dépôt international:
**PCT/FR2016/052619**

(87) Numéro de publication internationale:
**WO 2017/060660 (13.04.2017 Gazette 2017/15)**

(54) **PROCÉDÉ D'ESTIMATION DU MOUVEMENT D'UN PIÉTON**

VERFAHREN ZUR SCHÄTZUNG DER BEWEGUNG EINES FUSSGÄNGERS

METHOD FOR ESTIMATING THE MOVEMENT OF A PEDESTRIAN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2015 FR 1559591**

(43) Date de publication de la demande:
**15.08.2018 Bulletin 2018/33**

(73) Titulaire: **SYSNAV**
**27200 Vernon (FR)**

(72) Inventeurs:
• **VISSIERE, David**
**75009 Paris (FR)**
• **HILLION, Mathieu**
**27200 Vernon (FR)**
• **DORVEAUX, Eric**
**27200 Vernon (FR)**
• **JOUY, Augustin**
**27200 Vernon (FR)**
• **GRELET, Marc**
**27200 Vernon (FR)**

(74) Mandataire: **Regimbeau**
**87 rue de Sèze**
**69477 Lyon Cedex 06 (FR)**

(56) Documents cités:
EP-A1- 1 137 911    US-A1- 2009 254 276
US-A1- 2013 324 890

**Description**

DOMAINE TECHNIQUE GENERAL

La présente invention concerne le domaine de la navigation sans GPS.

Plus précisément, elle concerne un procédé d'estimation du mouvement d'un piéton en marche par des techniques magnéto-inertielles.

ETAT DE L'ART

Il est aujourd'hui commun pour un piéton de suivre sa position par GPS ou en utilisant un réseau de communication (triangulation à l'aide de bornes émettrices, réseau wifi ou autres). Il est possible de leur associer d'autres capteurs pour améliorer le positionnement par exemple des capteurs barométriques, de champ magnétique, d'image, de radar, etc.

Ces méthodes s'avèrent très limitées car elles ne fonctionnent pas en intérieur, dans les tunnels, ou trop loin des émetteurs, et s'avèrent dépendantes de technologies extérieures comme les satellites pour le GPS qui peuvent être indisponibles voire volontairement brouillées.

Alternativement, on connait aussi des méthodes « autonomes » pour suivre dans n'importe quel environnement le déplacement relatif d'un véhicule lourd tel qu'un avion de chasse ou de ligne, un sous-marin, un navire, etc., grâce à une centrale inertielle ou magnéto-inertielle. Par déplacement relatif, on entend la trajectoire du véhicule dans l'espace par rapport à un point et à un repère donnés à l'initialisation. En plus de la trajectoire, ces méthodes permettent également d'obtenir l'orientation du véhicule par rapport au même repère initial.

Une centrale inertielle est constituée au minimum de trois accéléromètres et de trois gyromètres disposés en triaxe. Typiquement, les gyromètres « maintiennent » un repère, dans lequel une double intégration temporelle des mesures des accéléromètres permet d'estimer le mouvement.

Il est notablement connu que pour pouvoir utiliser les méthodes de navigation inertielle classique, telles que mises en œuvre dans les applications lourdes comme la navigation des avions de chasse ou de ligne, des sous-marins, des navires, etc., il est nécessaire d'utiliser des capteurs de très haute précision. En effet la double intégration temporelle d'une mesure d'accélération fait qu'une erreur constante d'accélération crée une erreur de position qui augmente de façon proportionnelle au carré du temps.

Et ces capteurs de haute précision sont trop lourds, trop encombrants et trop chers pour être embarqués par un piéton.

Pour pouvoir estimer une trajectoire avec des capteurs inertiels léger et à bas coûts tels que ceux employés dans les téléphones portables par exemple, des méthodes différentes doivent être mises en œuvre ne nécessitant pas l'intégration des capteurs inertiels sur des périodes temporelles longues.

Une première méthode très répandue consiste à compter les pas effectués. La détection de chaque pas est réalisée en repérant un motif caractéristique d'un pas dans les mesures inertielles. Une estimation de la direction de la marche est obtenue séparément de la vitesse ou de la distance, par exemple en s'orientant au nord magnétique terrestre à l'aide de capteurs sensibles au champ magnétique. Dans de nombreux endroits, de fortes perturbations magnétiques rendent la détermination du cap magnétique terrestre imprécise. Ces perturbations sont particulièrement fréquentes à l'intérieur de bâtiments du fait de la présence de matériaux magnétiques par exemple dans le mobilier, les murs, installations électriques et objets divers, etc.

Pour cette raison des méthodes complémentaires ont été proposées pour s'orienter en dépit de ces perturbations. Par ailleurs, il est courant d'associer un filtre d'attitude par exemple de type Kalman étendu pour combiner les mesures de champ magnétique et inertielles. Cela permet d'améliorer la précision de l'orientation et notamment du cap.

Après chaque pas, la position estimée du porteur est mise à jour en effectuant un déplacement de la longueur estimée d'un pas dans la direction de la marche estimée à partir du cap calculé par la centrale inertielle.

Cette méthode a été utilisée en attachant la centrale inertielle à divers emplacements sur un individu, par exemple au pied, à la ceinture, dans une poche, au poignet, à la main, sur des lunettes, en frontale, etc.

La performance obtenue est limitée par l'estimation imprécise de la longueur du pas et la différence entre cap et direction de la marche. Cette estimation peut être améliorée à l'aide d'une harmonisation des repères et en reliant par un modèle la longueur et la fréquence des pas. Néanmoins une incertitude significative demeure car, d'une part, un piéton n'a jamais deux pas de longueur exactement identiques, et d'autre part, un piéton effectue différents types de marches avec des pas de longueur variables non distinguables, aucun modèle ne donne aujourd'hui satisfaction.

Une seconde méthode consiste à intégrer les mesures d'accélération et de vitesse angulaire sur des périodes de temps très courtes pour déterminer la trajectoire de la centrale inertielle et ainsi du porteur de la centrale. Cette méthode ne nécessite pas d'estimation de la longueur de pas mais est limitée par l'accumulation des erreurs d'intégration dont on a déjà parlé. Pour des capteurs de type MEMS, cela se traduit par une erreur du même ordre de grandeur que la longueur d'un pas après quelques secondes.

Une solution proposée dans la littérature (« Pedestrian tracking with shoe-mounted inertial sensors. Computer Graphics and Applications », Foxlin, E., IEEE Computer Graphics and Applications - Volume: 25, Issue: 6, pages 38-46, Nov.-Déc. 2005) consiste à réinitialiser la vitesse calculée lorsque l'on sait qu'elle est nulle, méthode souvent appelée ZUPT (Zéro velocity UPdaTe). Le pied en particulier a une vitesse nulle au contact du sol. Donc en plaçant la centrale inertielle sur la chaussure et en détectant la phase où le pied est au contact du sol, il est possible de réinitialiser la vitesse à zéro. L'intégration de l'accélération est alors nécessaire uniquement pendant la phase où le pied est en l'air, phase qui dure environ une seconde. Dès que le pied est au sol la vitesse est connue, égale à zéro.

Afin d'améliorer cette méthode, il est possible d'utiliser un filtre d'estimation par exemple de Kalman, un filtre non linéaire ou tout autre filtre pour combiner les informations des différents capteurs. Ce filtre peut par exemple comporter un état avec 6 degrés de liberté pour la vitesse et l'attitude. D'autres états peuvent être ajoutés par exemple la position, le biais des capteurs, etc. Le filtre donne également une mesure de l'incertitude des états estimés avec une matrice de covariance. Cela permet de combiner aisément les mesures de capteurs additionnels pour lesquels une estimation de l'incertitude est aussi disponible. Et il peut s'agir de mesures de position absolue ou relative.

Lors de la phase de ZUPT, la mise à jour des états du filtre est progressive et corrige éventuellement tous les états et pas uniquement la vitesse.

La méthode ZUPT permet ainsi d'améliorer la qualité de l'estimation du mouvement, mais s'avère poser un certain nombre de problèmes supplémentaires dus à la position peu pratique du capteur sur le pied. Cela le rend très sensible aux chocs (à régler en fonction type de semelle), peu esthétique et inconfortable car il faut l'intégrer à la chaussure. De surcroît, le cap est difficile à déterminer près du sol avec la présence de champs magnétiques parasites et la chaussure elle-même est souvent constituée de matériaux magnétiques. Enfin se pose le problème de la course, pour laquelle la phase durant laquelle le pied est immobile au sol est très réduite, voire nulle, ce qui empêche la correction des états du filtre.

Parallèlement, il est souhaitable d'estimer le mouvement des membres inférieurs pour caractériser certains troubles.

Comme dans les applications de navigations, les méthodes connues (voir la demande US 2013123665) proposent d'estimer la trajectoire d'un pied et par là la démarche du porteur à partir des mesures inertielles acquises par un dispositif à nouveau positionné sur le pied, avec pour conséquence les mêmes difficultés. Ainsi, l'étude de la démarche avec de tels dispositifs est limitée à des études ponctuelles dans un centre d'étude ou lors d'une activité spécifique comme une séance d'entraînement sportif, du fait de l'encombrement et de la non-praticité du capteur sur le pied.

Le document EP1137911 divulgue l'estimation du mouvement d'un piéton basée sur les mesures issues d'une centrale inertielle. Ladite centrale inertielle est placée sur un membre inférieur dudit piéton.

Il serait souhaitable de disposer d'une nouvelle méthode d'estimation du mouvement d'un piéton qui présente une qualité supérieure à celle des méthodes actuelles et ne soit pas contraignante.

## PRESENTATION DE L'INVENTION

La présente invention se rapporte ainsi selon un premier aspect à un procédé d'estimation du mouvement d'un piéton en marche selon la revendication 1.

Selon d'autres caractéristiques avantageuses et non limitatives :

- la vitesse dudit membre inférieur est estimée par intégration de l'accélération mesurée exprimée dans le référentiel terrestre en fonction de la vitesse angulaire mesurée, et le mouvement dudit membre inférieur est estimé par intégration de la vitesse estimée ;
- ladite vitesse attendue est donnée par la formule $\overrightarrow{v_{att}} = \vec{\omega} \wedge \vec{r}$, où $\vec{\omega}$ est la vitesse angulaire mesurée et $\vec{r}$ le bras de levier ;
- lesdits moyens de mesure inertielle sont disposés sur ledit membre inférieur entre une cheville et un genou ;
- l'étape (c) comprend le calcul par les moyens de traitement de données d'une accélération attendue en fonction de ladite vitesse angulaire mesurée et du bras de levier, ledit intervalle temporel de ladite marche du piéton pendant lequel ladite extrémité distale dudit membre inférieur est en contact du sol étant déterminé en fonction de l'accélération mesurée et de ladite accélération attendue ;
- ledit intervalle temporel de ladite marche du piéton pendant lequel ladite extrémité distale dudit membre inférieur est en contact du sol est déterminé à l'étape (c) comme celui pendant lequel un écart entre l'accélération mesurée et l'accélération attendue est inférieur à un seuil prédéterminé ;
- ladite accélération attendue est donnée par la formule $\overrightarrow{\gamma_{att}} = -\vec{g} + \dfrac{d\vec{\omega}}{dt} \wedge \vec{r} + \vec{\omega} \wedge \vec{\omega} \wedge \vec{r}$, où $\vec{\omega}$ est la vitesse angulaire mesurée, $\vec{r}$ le bras de levier et $\vec{g}$ l'accélération de la pesanteur ;
- ledit intervalle temporel de ladite marche du piéton pendant lequel ladite extrémité distale dudit membre inférieur est en contact du sol est déterminé à l'étape (c) comme celui pendant lequel l'accélération et/ou la vitesse angulaire mesurées correspondent à un motif prédéterminé représentatif du contact de l'extrémité du membre inférieur avec le sol ;

- la correction d'une vitesse estimée dudit membre inférieur à l'étape (c) comprend la mise en œuvre d'un filtre estimateur d'état linéaire ou non linéaire ;
- le procédé comprend une étape (a0) préalable de détermination dudit bras de levier ;
- le bras de levier est déterminé en minimisant l'écart entre l'accélération mesurée et une accélération attendue fonction de ladite vitesse angulaire mesurée et du bras de levier, lors d'un intervalle temporel prédéterminé de ladite marche du piéton pendant lequel ladite extrémité distale dudit membre inférieur est en contact du sol ;
- ladite détermination du bras de levier comprend l'intégration du bras de levier au filtre estimateur d'état linéaire ou non linéaire ;
- le procédé comprend une étape (f) subséquente d'analyse par les moyens de traitement de données du mouvement estimé de sorte à identifier un trouble de la marche dudit piéton.

Selon un deuxième aspect, l'invention concerne un équipement d'estimation du mouvement d'un piéton en marche selon la revendication 13.

Selon d'autres caractéristiques avantageuses et non limitatives :

- L'équipement est un boitier comprenant les moyens de mesure inertielle ;
- L'équipement comprend en outre des moyens d'attache du boitier au membre inférieur, un magnétomètre, et des moyens de communication.
- L'équipement est un terminal mobile ou un serveur, adapté pour communiquer avec un boitier comprenant les moyens de mesure inertielle.

Selon un troisième aspect, un exemple concerne un système comprenant l'équipement selon le deuxième aspect de l'invention et au moins un boitier en connexion.

Selon un quatrième et un cinquième aspect, l'invention concerne un produit programme d'ordinateur comprenant des instructions de code pour l'exécution d'un procédé d'estimation du mouvement d'un piéton en marche selon le premier aspect de l'invention ; et un moyen de stockage lisible par un équipement informatique sur lequel un produit programme d'ordinateur comprend des instructions de code pour l'exécution d'un procédé d'estimation du mouvement d'un piéton en marche selon le premier aspect de l'invention.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'équipements pour la mise en œuvre du procédé selon l'invention ;
- La figure 2 représente plus en détail un exemple de boitier pour la mise en œuvre du procédé selon l'invention ;
- les figures 3a-3b représentent schématiquement des étapes successives lors d'une phase de mise en contact du pied avec le sol ;
- les figures 4a-4b représentent des exemples de résultats d'estimation du mouvement d'un piéton obtenus grâce à la mise en œuvre du procédé selon l'invention.

DESCRIPTION DETAILLEE

*Estimation d'un mouvement*

La présente invention concerne un procédé d'estimation du mouvement d'un piéton 1 en marche.

La notion d' « estimation d'un mouvement » doit être comprise au sens large.

En effet, dans une première application, ce qui peut définir le mouvement (et qui sera donc estimé) est le déplacement global du piéton. Cela permet par exemple de suivre sa position sur une carte, de déterminer la distance parcourue, etc., en particulier pour de la navigation sans GPS, du monitoring personnel, etc.

Dans une deuxième application, ce qui peut définir le mouvement est au contraire la démarche du piéton, en particulier la trajectoire du pied. Cela est utile notamment dans un but médical.

*Architecture*

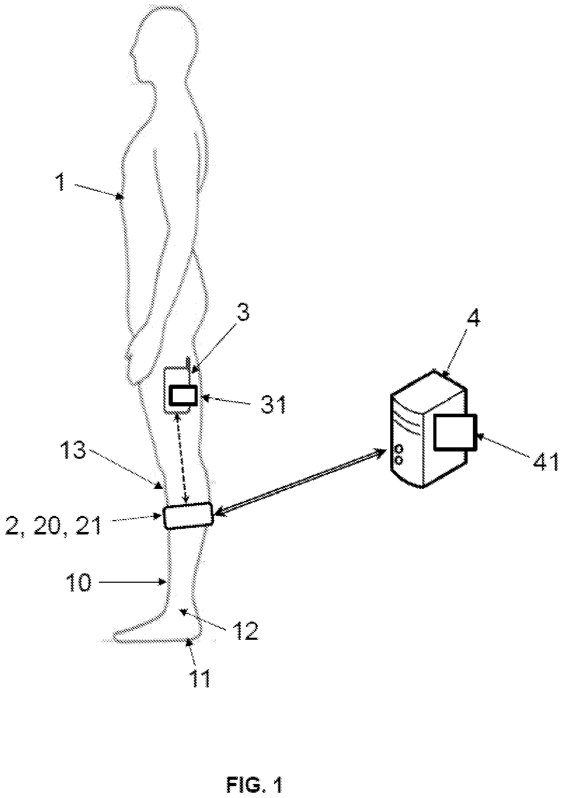

En référence à la **figure 1**, le piéton présente au moins un membre inférieur 10 (i.e. une jambe) équipée de moyens de mesure inertielle 20. On comprendra que chacun des deux membres inférieurs 10 du piéton 1 peut être équipé de moyens de mesure inertielle 20.

Plus précisément, les moyens de mesure inertielle 20 sont solidaires de ce membre inférieur 10, i.e. qu'ils présentent un mouvement sensiblement identique dans le référentiel terrestre, on verra comment plus loin. Les moyens de mesure inertielle sont avantageusement plus précisément disposés dans la région dite crurale de la jambe inférieure 10, c'est-à-dire la moitié basse qui s'étend entre une cheville 12 et un genou 13 du piéton (inclus), et de façon générale tout emplacement présentant, lorsqu'une extrémité distale 11 du membre inférieur 10 (i.e. le talon du pied) est en contact avec le sol (et avantageusement en permanence), sensiblement uniquement un mouvement de rotation par rapport à cette extrémité distale 11 du membre inférieur 10, c'est à dire dû à un bras de levier. Ainsi, lorsque le talon du pied 11 est posé, les moyens 20 ne peuvent quasiment faire qu'une rotation dans le référentiel terrestre, et non une translation.

On verra plus loin l'intérêt d'un tel positionnement. Pour résumer, les moyens 20 sont typiquement disposés au niveau d'un tibia du piéton 1, puisque par définition tout point du tibia n'est articulé avec le pied que par la cheville 12, et donc que leur mouvement relatif ne peut être qu'une rotation, mais on comprendra qu'ils peuvent être également sur la cuisse. En effet, pendant un pas, lorsque le talon du pied 11 est posé au sol, tout le membre inférieur 10 est rigide (il est en effet physiologiquement nécessaire de tendre la jambe sur laquelle on s'appuie pendant un pas, sous peine d'inconfort et d'inefficacité de la marche). Du fait de cette rigidité du membre inférieur lors de cette phase d'appui, on a bien un pur mouvement de rotation entre les points de la cuisse et l'extrémité distale 11 du membre 10. On comprendra que lors d'un appui sur l'autre membre inférieur il n'y a plus forcément de rotation pure entre la cuisse et le pied 11 du membre inférieur 10 considéré, mais cela n'a pas d'importance car le pied 11 est « en l'air » comme l'on verra plus loin. On comprendra enfin que les moyens 20. On notera enfin que bien évidemment les moyens 20 ne seront pas disposés sur le pied 11, car c'est justement la position que l'on cherche à éviter pour les désagréments qu'elle cause. Dans tous les cas, les points du pied 11 ne présentent pas de mouvement de rotation lorsque ce dernier est au sol et les moyens 20 ne peuvent donc pas y être disposés.

La distance entre le point de rotation de l'extrémité distale 11 et les moyens 20 est appelée dans la suite de la présente description « bras de levier ». Et on note $\vec{r}$ le vecteur représentant ce bras de levier orienté de l'extrémité 11 aux moyens 20.

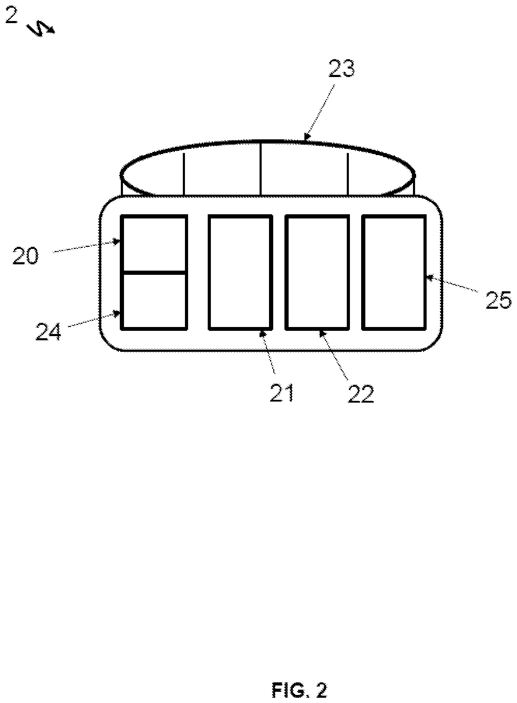

Les moyens de mesure inertielle 20 sont préférentiellement ceux d'un boitier 2 tel que représenté sur la **figure 2** présentant des moyens 23 d'attache au membre inférieur 10. Ces moyens d'attache 23 consistent par exemple en un bracelet par exemple à bande autoagrippante qui enserre le membre et permet la liaison solidaire. Comme l'on verra plus tard, il est en effet souhaitable que les moyens de mesure inertielle 20 soient disposés le plus près possible du genou 13, et ne puissent pas se déplacer le long du membre 10.

Par moyens de mesure inertielle 20, on entend une centrale à inertie comprenant au moins trois accéléromètres et trois gyromètres disposés en triaxe. Les gyromètres mesurent la vitesse angulaire instantanée de la centrale inertielle par rapport au référentiel terrestre, notée $\vec{\omega}$. Les accéléromètres sont sensibles aux forces extérieures autres que gravitationnelles appliquées sur le capteur, et permettent de mesurer une accélération notée $\vec{\gamma}$. Comme on le verra, les moyens 20 sont avantageusement accompagnés d'au moins un magnétomètre 24 de sorte à former des moyens 20, 24 de mesure magnéto-inertielle. Le magnétomètre 24 mesure un champ noté $\vec{B}$. Un tel magnétomètre 24 est utile pour indiquer un cap du piéton (i.e. une direction dans un plan horizontal), en particulier au démarrage puisque comme expliqué le mouvement est relatif. Le magnétomètre 24 n'est ensuite plus indispensable mais peut servir à recaler le cap qui dévie suite à l'accumulation d'erreurs liées aux mesures de vitesse angulaire.

Le boitier 2 peut comprendre des moyens de traitement 21 (typiquement un processeur) pour la mise en œuvre directement en temps réel des traitements du présent procédé, ou bien les mesures peuvent être émises via des moyens de communication 25 vers un dispositif externe tel qu'un terminal mobile (smartphone) 3, voire un serveur distant 4, ou encore les mesures peuvent être enregistrées dans des moyens de stockage de données 22 locaux (une mémoire par exemple de type flash) mémoire locale pour un traitement a posteriori par exemple sur le serveur 4.

Les moyens de communication 25 peuvent mettre en œuvre une communication sans fil à courte portée par exemple Bluetooth ou Wifi (en particulier dans un mode de réalisation avec un terminal mobile 3) voire être des moyens de connexion à un réseau mobile (typiquement UMTS/LTE) pour une communication à longue distance. Il est à noter que les moyens de communication 25 peuvent être par exemple une connectique filaire (typiquement USB) pour transférer les données des moyens de stockage de données 22 locaux à ceux d'un terminal mobile 3 ou d'un serveur 4.

Si c'est un terminal mobile 3 (respectivement un serveur 4) qui héberge « l'intelligence », il comprend des moyens de traitement 31 (respectivement 41) tels qu'un processeur pour la mise en œuvre des traitements du présent procédé qui vont être décrits. Lorsque les moyens de traitement utilisés sont ceux 21 du boitier 2, celui-ci peut encore inclure des moyens de communication 25 pour transmettre la position estimée. Par exemple la position du porteur peut être envoyée au terminal mobile 3 pour afficher la position dans une interface d'un logiciel de navigation.

Dans la suite de la présente description, on verra que les moyens de traitement de données 21, 31, 41 respectivement du boitier 2, d'un smartphone 3 et d'un serveur distant 4 peuvent indifféremment et selon les applications réaliser tout ou partie des étapes du procédé.

*Principe et notations*

Dans une première étape (a), le procédé comprend l'acquisition par les moyens de mesure inertielle 20 de l'accélération $\vec{\gamma}$ et de la vitesse angulaire $\vec{\omega}$ dudit membre inférieur 10. On note que dans la suite de la description, lorsqu'on mentionne accélération/vitesse/position du membre inférieur 10, on entend au niveau des moyens de mesure inertielle 20.

Ces grandeurs sont avantageusement mesurées avec un échantillonnage dt (i.e. toutes les « dt » secondes) avec dt très petit devant le temps caractéristique des mouvements du piéton 1, typiquement 40 ms.

L'orientation des moyens 20 par rapport au référentiel inertiel terrestre peut être donnée par exemple par une matrice de rotation (notée R), un quaternion d'attitude (noté q), l'attitude est synonyme d'orientation dans l'espace ou des angles d'Euler (roulis $\varphi$, tangage $\theta$, lacet $\psi$). Ces trois représentations sont équivalentes, on les utilise donc indifféremment dans ce document. La vitesse et la position des moyens 20 (et donc du membre inférieur 10) sont notées respectivement $\vec{v}$ et $\vec{d}$, et s'estiment respectivement par une simple et une double intégration de l'accélération dans le référentiel terrestre, qui comme l'on verra plus loin se calcule à partir de l'accélération $\vec{\gamma}$ mesurée (donnée dans le référentiel mobile des moyens de mesure inertielle 20) et de l'orientation des moyens 20 par rapport au référentiel terrestre (mise à jour à partir des mesures de vitesse angulaire).

L'initialisation de l'attitude peut se faire par exemple à partir des mesures d'accélération (et le cas échéant des mesures d'un éventuel magnétomètre 24) en considérant que le membre 10 et donc les moyens 20 sont immobiles au démarrage et que le champ magnétique est égal au champ magnétique terrestre. Dans ce cas l'accélération mesurée est égale à l'opposé du champ gravitationnel $\vec{\gamma} = -\vec{g}$. On a alors le roulis et le tangage avec les formules suivantes:

$$\varphi = -\tan^{-1}\frac{\gamma_y}{\gamma_z}$$

$$\theta = \sin^{-1}\frac{\gamma_x}{\sqrt{\gamma_x{}^2 + \gamma_y{}^2 + \gamma_z{}^2}}$$

Le cap magnétique peut alors se calculer à partir de la mesure de champ magnétique avec la formule:

$$\psi = \tan^{-1}\frac{B_z \cdot \sin\varphi - B_y \cdot \cos\varphi}{B_x \cdot \cos\theta + B_y \cdot \sin\theta \cdot \sin\varphi + B_z \cdot \sin\theta \cdot \cos\varphi}$$

La formule donnant la matrice de passage du référentiel terrestre au référentiel des moyens 20 à partir des angles d'Euler est:

$$R_{i\to b}$$
$$= \begin{bmatrix} \cos\theta \cdot \cos\psi & -\cos\theta \cdot \sin\psi & \sin\theta \\ \cos\psi \cdot \sin\theta \cdot \sin\varphi + \cos\varphi \cdot \sin\psi & \cos\varphi \cdot \cos\psi - \sin\theta \cdot \sin\varphi \cdot \sin\psi & -\cos\theta \cdot \sin\varphi \\ \sin\varphi \cdot \sin\psi - \cos\varphi \cdot \cos\psi \cdot \sin\theta & \cos\psi \cdot \sin\varphi + \cos\varphi \cdot \sin\theta \cdot \sin\psi & \cos\theta \cdot \cos\varphi \end{bmatrix}$$

La vitesse et la position des moyens 20 par rapport au référentiel terrestre sont initialisées à zéro. La position initiale ne peut pas être déterminée directement à partir des mesures d'accéléromètres, gyromètres et magnétomètres, elle peut être fournie par un autre capteur (par exemple GPS) ou indiquée par l'utilisateur. On connait donc au cours du temps avec les seuls capteurs inertiels (et le cas échéant magnétiques) la position relative du dispositif 2 (et donc du piéton 1), définie par rapport à la position initiale.

On désignera le référentiel inertiel terrestre par l'indice i et le référentiel des moyens 20 aussi appelé *body* par l'indice b. Ainsi la matrice de changement de base du référentiel inertiel terrestre vers le référentiel centrale est notée $R_{i\to b}$. On note $\hat{R}_n$ l'estimation de cette matrice après n pas d'échantillon.

L'attitude est liée à la vitesse angulaire $\vec{\omega}$ selon l'équation différentielle sur la matrice de passage $R_{i \to b}$. Les coordonnées de $\omega$ sont exprimées dans la base de la centrale inertielle.

$$\dot{R}_{i \to b} = \begin{bmatrix} 0 & -\omega_{bz} & \omega_{by} \\ \omega_{bz} & 0 & -\omega_{bx} \\ -\omega_{by} & \omega_{bx} & 0 \end{bmatrix} \cdot R_{i \to b}$$

En considérant que la période de l'échantillonnage notée dt est suffisamment petite, on peut par exemple utiliser un développement à l'ordre 1 comme approximation:

$$R_{i \to b}(t + dt) = R_{i \to b}(t) + \dot{R}_{i \to b}(t) \cdot dt$$

Cette approximation peut être utilisée pour mettre à jour l'estimation de la matrice $\hat{R}_n$ pour chaque mesure:

$$\hat{R}_{n+1} = \hat{R}_n + \begin{bmatrix} 0 & -\omega_z & \omega_y \\ \omega_z & 0 & -\omega_x \\ -\omega_y & \omega_x & 0 \end{bmatrix} \cdot \hat{R}_n \cdot dt$$

Pour mettre à jour la position et la vitesse, on utilise la mesure de l'accélération. En particulier, le procédé comprend classiquement une étape (b) d'estimation de la vitesse en fonction de ladite accélération mesurée (en pratique par intégration) et une étape (e) d'estimation du mouvement en fonction de la vitesse estimée (en pratique également par intégration).

Ainsi, l'accélération des moyens 20 par rapport au référentiel terrestre est donnée par:

$$\vec{a} = \vec{\gamma} + \vec{g}$$

Et l'approximation donnant la vitesse en fonction de l'accélération est:

$$\overrightarrow{v(t + dt)} = \overrightarrow{v(t)} + \overrightarrow{a(t)} \cdot dt$$

Et l'estimation de la vitesse est ainsi mise à jour pour chaque mesure selon:

$$\hat{v}_{n+1} = \hat{v}_n + \hat{a}_n \cdot dt$$

La mesure de l'accéléromètre est connue dans le référentiel des moyens 20 *body* tandis que le champ gravitationnel est connu dans le référentiel terrestre, l'expression de l'accélération dans le référentiel terrestre est donc:

$$\begin{bmatrix} a_{ix} \\ a_{iy} \\ a_{iz} \end{bmatrix} = R_{b \to i} \cdot \begin{bmatrix} \gamma_{bx} \\ \gamma_{by} \\ \gamma_{bz} \end{bmatrix} + \begin{bmatrix} 0 \\ 0 \\ -g \end{bmatrix}$$

Donc si on exprime la vitesse dans la base du référentiel terrestre la formule de mise à jour au nième pas d'échantillon est:

$$\begin{bmatrix} \hat{v}_{ix,n+1} \\ \hat{v}_{iy,n+1} \\ \hat{v}_{iz,n+1} \end{bmatrix} = \begin{bmatrix} \hat{v}_{ix,n} \\ \hat{v}_{iy,n} \\ \hat{v}_{iz,n} \end{bmatrix} + \left( \widehat{R}_n^{-1} \cdot \begin{bmatrix} \gamma_{bx,n} \\ \gamma_{by,n} \\ \gamma_{bz,n} \end{bmatrix} + \begin{bmatrix} 0 \\ 0 \\ -g \end{bmatrix} \right) \cdot dt$$

Et si on exprime la vitesse dans la base du référentiel de la centrale, la formule de mise à jour au nième pas d'échantillon est:

$$\begin{bmatrix} \hat{v}_{bx,n+1} \\ \hat{v}_{by,n+1} \\ \hat{v}_{bz,n+1} \end{bmatrix} = \widehat{R}_{n+1} \cdot \widehat{R}_n^{-1} \cdot \begin{bmatrix} \hat{v}_{bx,n} \\ \hat{v}_{by,n} \\ \hat{v}_{bz,n} \end{bmatrix} + \widehat{R}_{n+1} \cdot \left( \widehat{R}_n^{-1} \cdot \begin{bmatrix} \gamma_{bx,n} \\ \gamma_{by,n} \\ \gamma_{bz,n} \end{bmatrix} + \begin{bmatrix} 0 \\ 0 \\ -g \end{bmatrix} \right) \cdot dt$$

Ce qui devient après substitutions et à l'ordre 1 en dt:

$$\begin{bmatrix} \hat{v}_{bx,n+1} \\ \hat{v}_{by,n+1} \\ \hat{v}_{bz,n+1} \end{bmatrix} = \begin{bmatrix} \hat{v}_{bx,n} \\ \hat{v}_{by,n} \\ \hat{v}_{bz,n} \end{bmatrix} + \left( \begin{bmatrix} 0 & -\omega_z & \omega_y \\ \omega_z & 0 & -\omega_x \\ -\omega_y & \omega_x & 0 \end{bmatrix} \cdot \begin{bmatrix} \hat{v}_{bx,n} \\ \hat{v}_{by,n} \\ \hat{v}_{bz,n} \end{bmatrix} + \begin{bmatrix} \gamma_{bx,n} \\ \gamma_{by,n} \\ \gamma_{bz,n} \end{bmatrix} + \widehat{R}_n \cdot \begin{bmatrix} 0 \\ 0 \\ -g \end{bmatrix} \right) \cdot dt$$

Enfin l'estimation de la position est mise à jour selon:

$$\begin{bmatrix} \hat{d}_{ix,n+1} \\ \hat{d}_{iy,n+1} \\ \hat{d}_{iz,n+1} \end{bmatrix} = \begin{bmatrix} \hat{d}_{ix,n} \\ \hat{d}_{iy,n} \\ \hat{d}_{iz,n} \end{bmatrix} + \begin{bmatrix} \hat{v}_{ix,n} \\ \hat{v}_{iy,n} \\ \hat{v}_{iz,n} \end{bmatrix} \cdot dt$$

De façon préférée, avec un filtre de Kalman étendu (on reviendra la dessus plus loin), la matrice de covariance est mise à jour en linéarisant les formules précédentes autour du point courant.

*Condition pied au sol*

Le présent procédé utilise astucieusement la condition « pied au sol » sur laquelle est basée la méthode ZUPT, mais sans la nécessité d'avoir le capteur sur le pied.

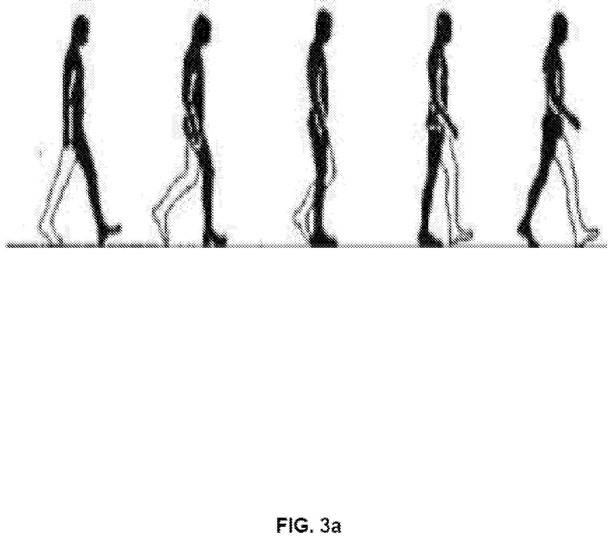

Comme l'on voit sur la **figure 3a**, le pied noir au contact du sol a une vitesse nulle dans la phase représentée pour les étapes 2 à 4. Les moyens de mesure inertielle 20 étaient statiques lorsque le pied est au sol dans la méthode ZUPT (et donc on pouvait réinitialiser la vitesse)

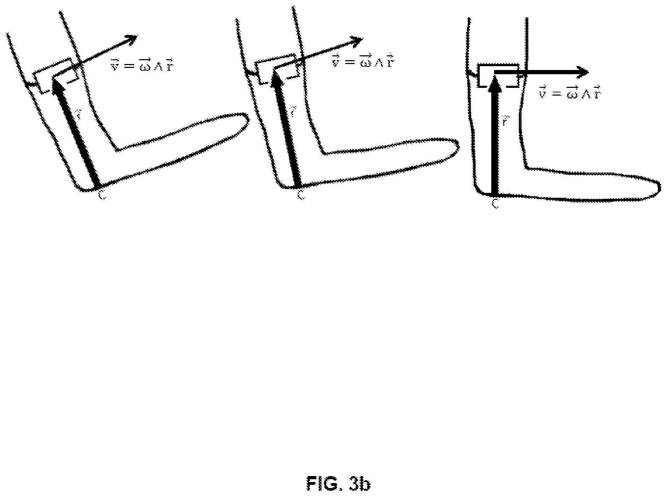

La **figure 3b** représente cette fois un placement possible des moyens de mesure inertielle 20 au-dessus de la cheville 12 pendant la phase de contact talon/sol. Dans le cas du présent procédé les moyens de mesure inertielle 20 réalisent une rotation au moins pendant cette phase pied au sol, et donc présentent une « vitesse attendue » des moyens 20 (i.e. dudit membre inférieur 10) qui va permettre un recalage. Ladite vitesse attendue est fonction de la vitesse angulaire mesurée et dudit bras de levier, en particulier se calcule à partir du modèle jambe en rotation autour de l'extrémité 11 fixe sur le sol. Elle est alors égale au produit vectoriel entre le vecteur rotation instantanée $\vec{\omega}$ et le vecteur $\vec{r}$ :

$$\vec{v} = \vec{\omega} \wedge \vec{r}$$

Une difficulté par rapport à la méthode ZUPT est d'arriver à déterminer un intervalle temporel de ladite marche du piéton 1 pendant lequel ladite extrémité distale 11 dudit membre inférieur 10 est en contact avec sol, et plus exactement le moment où le mouvement est une pure rotation et le modèle donnant la vitesse est correct.

Pour cela, une étape (c) permet de déterminer cet intervalle temporel de contact du sol en fonction de l'accélération mesurée, de la vitesse angulaire mesurée, et du bras levier supposé ou estimé. Cela explique pourquoi il n'est pas indispensable que les moyens 20 présentent sensiblement un mouvement de rotation par rapport l'extrémité distale 11 du membre inférieur 10 lorsqu'elle n'est pas en contact avec le sol

Dans un premier mode de réalisation, cette étape (c) comprend le calcul par les moyens de traitement de données 21, 31, 41 d'une « accélération attendue » en fonction de ladite vitesse angulaire mesurée et du bras de levier.

En effet, avec le même modèle qui suppose les moyens 20 en rotation à la distance r (i.e. la longueur du bras de levier) du point fixe 11, l'accélération théorique est égale à:

$$\overrightarrow{a_{att}} = \frac{d\overrightarrow{\omega}}{dt} \wedge \vec{r} + \overrightarrow{\omega} \wedge \overrightarrow{\omega} \wedge \vec{r}$$

En ajoutant le terme dû au champ de gravité la mesure d'accélération attendue est égale à:

$$\overrightarrow{\gamma_{att}} = -\vec{g} + \frac{d\overrightarrow{\omega}}{dt} \wedge \vec{r} + \overrightarrow{\omega} \wedge \overrightarrow{\omega} \wedge \vec{r}$$

Cette relation donne un critère pour déterminer si le modèle de bras de levier est correct, et l'étape (c) comprend la détermination de l'intervalle temporel de contact au sol en fonction de l'accélération mesurée et de ladite accélération théorique.

Plus précisément, on considère le modèle valide lorsque l'écart entre la mesure attendue de l'accélération et la mesure réalisée par les moyens de mesure inertielle 20 est nul:

$$\overrightarrow{Ecart} = \vec{\gamma} - \overrightarrow{\gamma_{att}} = \vec{\gamma} + \vec{g} - \frac{d\overrightarrow{\omega}}{dt} \wedge \vec{r} - \overrightarrow{\omega} \wedge \overrightarrow{\omega} \wedge \vec{r}$$

Le champ de gravité est connu dans le référentiel terrestre tandis que les mesures du gyromètre et de l'accéléromètre ainsi que $\vec{r}$ sont connus dans la base de la centrale inertielle. Pour calculer l'écart vectoriel, il faut donc effectuer un changement de base. Pour ne pas dépendre de la matrice de changement de base, on peut comparer les normes des vecteurs

$$Ecart = \left| \vec{\gamma} - \frac{d\overrightarrow{\omega}}{dt} \wedge \vec{r} - \overrightarrow{\omega} \wedge \overrightarrow{\omega} \wedge \vec{r} \right| - |\vec{g}|$$

Le terme $\frac{d\overrightarrow{\omega}}{dt} \wedge \vec{r}$ est en général petit par rapport aux autres termes, il est donc possible pour éviter d'avoir à calculer la dérivée du la vitesse angulaire de la négliger. La formule de l'écart se simplifie alors:

$$Ecart = |\vec{\gamma} - -\overrightarrow{\omega} \wedge \overrightarrow{\omega} \wedge \vec{r}| - |\vec{g}|$$

Cet écart n'est en pratique pas exactement nul et on sélectionne la période durant laquelle il est inférieur à un seuil prédéterminé, par exemple 10% de $|\vec{g}|$. En d'autres termes, ledit intervalle temporel de ladite marche du piéton 1 pendant lequel ladite extrémité distale 11 dudit membre inférieur 10 est en contact du sol est déterminé à l'étape (c) comme celui pendant lequel un écart entre l'accélération mesurée et l'accélération théorique est inférieur à ce seuil prédéterminé.

Dans un second mode de réalisation qui ne fait pas partie de la présente invention, on peut rechercher grossièrement la phase de contact avec le sol à partir d'un motif caractéristique sur le signal des capteurs. La rotation de la jambe lors du balancement ou le choc lorsque le pied touche le sol par exemple peuvent permettre de déterminer approximativement ledit intervalle de contact au sol. Par exemple, lorsque l'accélération d'un choc est détectée, on peut décider que pendant une durée caractéristique (par exemple un quart de seconde) suivant cette détection le pied est au sol.

Alternativement, on peut dans une phase préalable d'étalonnage mesurer les valeurs classiques d'accélération et de vitesse angulaire correspondant à un contact du pied au sol, ces valeurs classiques (ponctuelles ou sur un intervalle) constituant le motif de référence, et identifier les intervalles de temps minimisant l'écart entre les valeurs mesurées et ce motif de référence.

Dans tous les cas, on peut alors chercher dans ledit intervalle le moment où l'écart défini à partir de l'accélération est minimum. De cette façon, le meilleur moment pour effectuer le recalage est identifié. Par exemple, on peut utiliser une méthode alternative basée sur un motif prédéterminé pour identifier grossièrement l'intervalle de contact au sol, puis minimiser l'écart entre l'accélération mesurée et l'accélération attendue au sein de cet intervalle (i.e. utiliser la méthode principale décrite ci-avant).

Dans ledit intervalle temporel déterminé (et préférentiellement au point identifié dans cet intervalle), une étape (d) permet le recalage de la vitesse estimée.

Plus précisément, est calculée par les moyens de traitement de données 21, 31, 41 ladite vitesse attendue du membre inférieur 10 en fonction de ladite vitesse angulaire mesurée et dudit bras de levier. En particulier, comme expliqué elle est égale au produit vectoriel entre le vecteur rotation instantanée $\vec{\omega}$ et le vecteur $\vec{r}$ :

$$\overrightarrow{v_{att}} = \vec{\omega} \wedge \vec{r}$$

La vitesse estimée dudit membre inférieur 10 est alors corrigée en fonction de la vitesse attendue.

La différence entre cette vitesse attendue et la vitesse estimée $\vec{v}$ obtenue par intégrations successives est utilisée pour le recalage. Il est tout à fait possible de recaler en remplaçant simplement la valeur de la vitesse estimée par la vitesse attendue, mais de façon préférée et comme expliqué, un filtre estimateur d'état linéaire (filtre Luenberger, Filtre de Kalman, etc.) ou non-linéaire (filtre de Kalman étendu, observateur invariant, etc.) est utilisé. Dans la présente description, on prendra l'exemple d'un filtre de Kalman étendu, mais l'homme du métier saura transposer à d'autres filtres.

Le gain de Kalman $K_{n+1}$ est calculé à partir de la matrice de covariance selon la formule d'un filtre de Kalman étendu. On peut modéliser les erreurs dues aux capteurs et aux approximations comme un bruit de distribution gaussienne. La variance est estimée en mesurant le bruit des capteurs au repos. Le recalage de l'estimation de l'état $\hat{X}_{n+1,n}$ contenant la matrice de changement de base, la vitesse et la position se fait en ajoutant le terme de correction:

$$\hat{x}_{n+1,n+1} = \hat{x}_{n+1,n} + K_{n+1} \cdot \left( \begin{bmatrix} \omega_x \\ \omega_y \\ \omega_z \end{bmatrix} \wedge \begin{bmatrix} r_x \\ r_y \\ r_z \end{bmatrix} - \begin{bmatrix} \hat{v}_{bx,n+1} \\ \hat{v}_{by,n+1} \\ \hat{v}_{bz,n+1} \end{bmatrix} \right)$$

On note qu'en pratique l'erreur de vitesse permet également de corriger l'orientation.

Lorsque le pied quitte le contact du sol, l'attitude et la vitesse sont à nouveau uniquement mises à jour à partir des valeurs mesurées de l'accélération et de la vitesse angulaire fournies par les moyens 20. Les erreurs de calcul de la vitesse dues à la double intégration des accéléromètres sont ainsi réinitialisées à chaque pas.

*Calcul du bras de levier*

On note que la longueur du bras de levier peut être une constante saisie par l'utilisateur (le cas échéant après mesure).

Mais alternativement, on ne connaît pas forcément la position exacte du boitier 2 sur la jambe donc $\vec{r}$ peut ne pas être connu a priori. Dans ce cas, le procédé comprend avantageusement une étape préalable (a0) de détermination dudit bras de levier. Par ailleurs on note que le boitier 2 peut légèrement bouger le long du membre inférieur 10, donc l'étape (a0) peut être mise à nouveau en œuvre (à intervalles réguliers ou sur instructions du piéton 1) lors de la marche pour redéterminer $\vec{r}$.

Il est en effet possible d'estimer la valeur de ce vecteur soit séparément soit en intégrant directement $\vec{r}$ à l'état du filtre de Kalman. Si on suppose que les moyens de mesure inertielle 20 sont montés de façon à ce que l'axe z soit aligné avec l'axe de la jambe, le bras de levier $\vec{r}$ peut être considéré comme aligné avec l'axe z et les coordonnées x et y sont nulles:

$$\begin{bmatrix} r_x \\ r_y \\ r_z \end{bmatrix} = \begin{bmatrix} 0 \\ 0 \\ r_z \end{bmatrix}$$

En particulier, le produit vectoriel donnant la vitesse devient:

$$\begin{bmatrix} \omega_x \\ \omega_y \\ \omega_z \end{bmatrix} \wedge \begin{bmatrix} r_x \\ r_y \\ r_z \end{bmatrix} = \begin{bmatrix} \omega_x \\ \omega_y \\ \omega_z \end{bmatrix} \wedge \begin{bmatrix} 0 \\ 0 \\ r_z \end{bmatrix} = \begin{bmatrix} \omega_y \cdot r_z \\ -\omega_x \cdot r_z \\ 0 \end{bmatrix}$$

En ajoutant un champ $r_z$ à l'état du filtre de Kalman étendu, un recalage de $r_z$ est effectué en fonction de l'erreur de vitesse mesurée à chaque phase de pied au sol.

Alternativement on peut aussi d'estimer $\vec{r}$ directement lorsque le pied est au contact du sol. On a expliqué que cette phase peut se déterminer par exemple à partir du choc subi lorsque le pied touche le sol, ou alors il s'agit d'un intervalle prédéterminé où l'utilisateur pose sciemment le pied au contact du sol.

Durant cette phase, on a expliqué que la mesure de l'accéléromètre est donnée par:

$$\vec{a} = \frac{d\vec{\omega}}{dt} \wedge \vec{r} + \vec{\omega} \wedge \vec{\omega} \wedge \vec{r}$$

$$\begin{bmatrix} a_x \\ a_y \\ a_z \end{bmatrix} = \left( \begin{bmatrix} \dfrac{d\omega_y}{dt} \\ -\dfrac{d\omega_x}{dt} \\ 0 \end{bmatrix} + \begin{bmatrix} \omega_x \cdot \omega_z \\ \omega_y \cdot \omega_z \\ -\omega_x{}^2 \cdot r_z - \omega_y{}^2 \end{bmatrix} \right) \cdot r_z$$

On peut ainsi chercher la valeur de $r_z$ qui minimise en moyenne la quantité:

$$\left| \vec{\gamma} - \left( \begin{bmatrix} \dfrac{d\omega_y}{dt} \\ -\dfrac{d\omega_x}{dt} \\ 0 \end{bmatrix} + \begin{bmatrix} \omega_x \cdot \omega_z \\ \omega_y \cdot \omega_z \\ -\omega_x{}^2 \cdot r_z - \omega_y{}^2 \end{bmatrix} \right) \cdot r_z \right| - |\vec{g}|$$

Enfin si on ne connait pas l'orientation des moyens de mesure inertielle 20, on peut ajouter les trois coordonnées du bras de levier au filtre. Le recalage concerne alors les trois coordonnées.

La position des moyens 20 sur le membre inférieur 10 peut également être estimée grâce à l'utilisation complémentaire d'autres capteurs lorsqu'ils sont disponibles, par exemple un GPS donnant une vitesse et l'orientation de la centrale par rapport à la terre, l'inconnue étant alors le bras de levier, ou encore un système de vision donnant une vitesse et l'orientation. En fonction de la précision de l'information par rapport à la vitesse exacte au niveau du capteur, un temps de filtrage plus ou moins long sera nécessaire.

*Résultats*

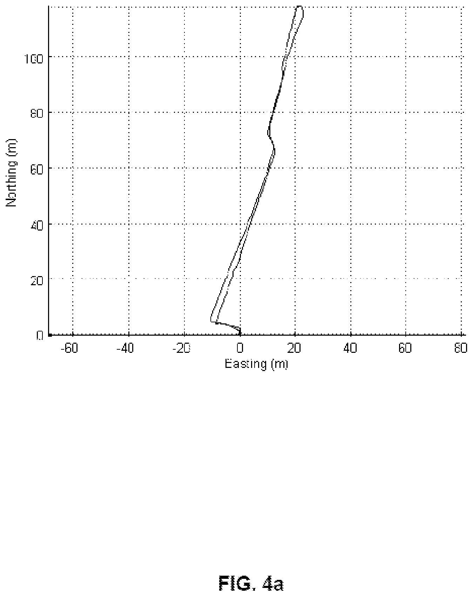

La **figure 4a** représente un exemple d'une trajectoire obtenue après intégration des mesures d'un boiter 2 porté au-dessus de la cheville 12. La marche est constituée d'un aller-retour dans une rue avec descente puis montée de deux escaliers. Les accéléromètres et les gyromètres utilisés dans les moyens 20 sont des capteurs MEMS précisément calibrés. Un filtre de Kalman étendu a été utilisé avec un recalage utilisant le modèle du bras de levier lorsque le pied est au sol comme précédemment décrit.

On constate l'absence de dérive sur une marche de plusieurs centaine de mètres (le piéton 1 revient exactement au point de départ) et la qualité et la précision de la navigation.

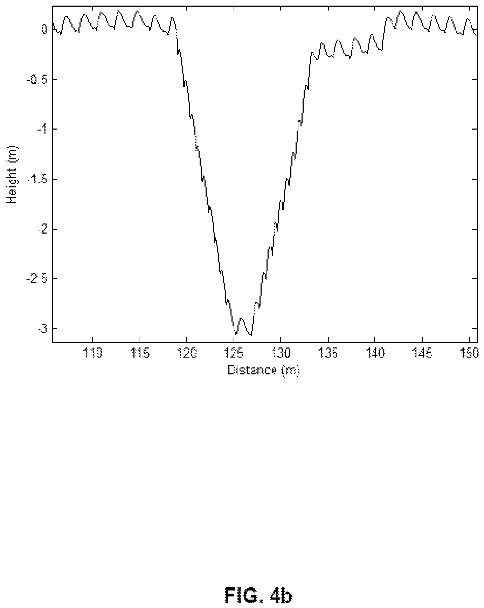

La **figure 4b** représente plus précisément la descente et montée des escaliers au cours de la marche illustrée sur la figure 4a. On montre ici la hauteur du boitier 2 en fonction de la distance parcourue. Chaque foulée sur le plat se reconnaît distinctivement, la cheville 12 s'élevant d'environ 18 cm en effectuant une trajectoire courbe. Lors de la descente des escaliers entre les distances marquées 118 m et 125 m, on reconnaît chaque foulée, le pied 11 franchissant deux marches et sur une hauteur d'environ 30 cm. De même entre les distances marquées de 128 m à 132 m, on reconnaît pour chaque foulée le franchissement de deux marches.

Ainsi, alors même qu'on est dans un environnement très problématique pour une centrale magnéto-inertielle (montée et descente d'escaliers, au lieu de rester sur du plat), on constate que la qualité offerte par le présent procédé reste irréprochable.

Ce dernier s'avère optimal pour suivre le parcours d'un piéton 1 dans une zone peu ou mal couverte par un signal GPS, à l'intérieur de bâtiments, en sous-sol, près de hautes parois, en forêt, etc.

Comme expliqué avant, une telle vue montrant pour chaque pas l'élévation des moyens 20 permet de détecter facilement des troubles de la marche.

*Equipements et système*

Selon un deuxième aspect, l'invention concerne en particulier les équipements 2, 3, 4 pour la mise en œuvre de l'un ou l'autre des modes de réalisation du procédé.

Comme expliqué précédemment, selon un premier mode de réalisation l'équipement est un boitier 2 autonome comprenant les moyens de mesure inertielle 20 et les moyens de traitement de données 21 configurés pour la mise en œuvre des étapes du procédé.

Le boitier 2 comprend en outre des moyens d'attache 23 du boitier 2 au membre inférieur 10, et le cas échéant un magnétomètre 24, des moyens de stockage de données 22 (pour le stockage des accélérations/vitesse angulaires mesurées ou des mouvements estimés) et/ou des moyens de communication 25 pour l'exportation des résultats.

Selon un deuxième mode de réalisation, l'équipement est un terminal mobile 3 ou un serveur 4, adapté pour communiquer avec un boitier 2 comprenant les moyens de mesure inertielle 20. En d'autres termes, le terminal 3 ou le serveur 4 comprend les moyens de traitement 31 ou 41 configurés pour la mise en œuvre des étapes du procédé. Chaque boitier 2 peut tout de même comprendre des moyens de traitement de données 21 pour le contrôle des moyens 20 et la transmission (via des moyens de communication 25) des données mesurées aux moyens de traitement de données 31, 41.

Il est à noter que les moyens 21, 31, 41 peuvent le cas échéant se partager des étapes du procédé. Par exemple, en cas d'application médicale, les moyens de traitement 21 du boitier 2 peuvent réaliser les étapes jusqu'à (e), et a posteriori les moyens 41 du serveur 4 mettent en œuvre l'étape (f) d'analyse de sorte à identifier un éventuel trouble de la marche dudit piéton 1.

L'invention concerne dans ce cas également le système comprenant l'équipement 3, 4 selon ce mode de réalisation et le ou les boitiers 2 « satellites » en connexion

Dans tous les cas, les moyens de traitement de données 21, 31, 41 de l'équipement 2, 3, 4 « principal » sont configurés pour mettre en œuvre :

- Un module de réception d'une accélération et d'une vitesse angulaire d'un membre inférieur 10 dudit piéton 1 acquises par des moyens de mesure inertielle 20 solidaires dudit membre inférieur 10 et disposés de sorte à présenter sensiblement un mouvement de rotation par rapport à une extrémité distale 11 dudit membre inférieur 10 au moins lorsque ladite extrémité distale 11 du membre inférieur 10 est en contact avec le sol ;
- Un module d'estimation d'une vitesse dudit membre inférieur 10 en fonction de ladite accélération et de ladite vitesse angulaire mesurées ;
- Un module de détermination d'un intervalle temporel de ladite marche du piéton 1 pendant lequel ladite extrémité distale 11 dudit membre inférieur 10 est en contact du sol en fonction de l'accélération mesurée, de la vitesse angulaire mesurée, et d'un bras de levier entre les moyens de mesure inertielle 20 et ladite extrémité distale 11 ;
- Un module de calcul dans ledit intervalle temporel déterminé d'une vitesse attendue dudit membre inférieur 10 en fonction de ladite vitesse angulaire mesurée et dudit bras de levier ;
- Un module de correction dans ledit intervalle temporel de la vitesse estimée dudit membre inférieur 10 en fonction de la vitesse attendue ;
- Un module d'estimation du mouvement du piéton 1 en fonction de la vitesse estimée dudit membre inférieur 10.

*Produit programme d'ordinateur*

Selon un troisième et un quatrième aspects, l'invention concerne un produit programme d'ordinateur comprenant des instructions de code pour l'exécution (sur les moyens de traitement 21, 31, 41) d'un procédé d'estimation du mouvement d'un piéton 1 en marche selon le premier aspect de l'invention, ainsi que des moyens de stockage lisibles par un équipement informatique (par exemple des moyens de stockage de données 22) sur lequel on trouve ce produit programme d'ordinateur.

**Revendications**

1. Procédé d'estimation du mouvement d'un piéton (1) en marche comprenant des étapes de :

   (a) Mesure par des moyens de mesure inertielle (20) solidaires d'un membre inférieur (10) dudit piéton (1) et disposés de sorte à présenter sensiblement un mouvement de rotation par rapport à une extrémité distale (11) dudit membre inférieur (10) au moins lorsque ladite extrémité distale (11) du membre inférieur (10) est en contact avec le sol, d'une accélération et d'une vitesse angulaire dudit membre inférieur (10) ;
   (b) Estimation par des moyens de traitement de données (21, 31, 41) d'une vitesse dudit membre inférieur (10) en fonction de ladite accélération et de ladite vitesse angulaire mesurées.
   (c) Détermination par les moyens de traitement de données (21, 31, 41) d'un intervalle temporel de ladite marche du piéton (1) pendant lequel ladite extrémité distale (11) dudit membre inférieur (10) est en contact du sol en fonction de l'accélération mesurée, de la vitesse angulaire mesurée, et d'un bras de levier entre les moyens de mesure inertielle (20) et ladite extrémité distale (11) ;
   (d) Dans ledit intervalle temporel déterminé :

   ◦ calcul par les moyens de traitement de données (21, 31, 41) d'une vitesse attendue dudit membre inférieur (10) en fonction de ladite vitesse angulaire mesurée et dudit bras de levier ;
   ◦ Correction de la vitesse estimée dudit membre inférieur (10) en fonction de la vitesse attendue ;

   (e) Estimation par les moyens de traitement de données (21, 31, 41) du mouvement du piéton (1) en fonction de la vitesse corrigée dudit membre inférieur (10).

2. Procédé selon la revendication 1, dans lequel la vitesse dudit membre inférieur (10) est estimée par intégration de l'accélération mesurée exprimée dans le référentiel terrestre en fonction de la vitesse angulaire mesurée, et le mouvement dudit membre inférieur (10) est estimé par intégration de la vitesse estimée.

3. Procédé selon l'une des revendications 1 et 2, dans lequel ladite vitesse attendue est donnée par la formule $\overrightarrow{v_{att}}$ = $\vec{\omega} \wedge \vec{r}$, où $\vec{\omega}$ est la vitesse angulaire mesurée et $\vec{r}$ le bras de levier.

4. Procédé selon l'une des revendications 1 à 3, dans lequel lesdits moyens de mesure inertielle (20) sont disposés sur ledit membre inférieur (10) entre une cheville (12) et un genou (13).

5. Procédé selon l'une des revendications 1 à 4, dans lequel l'étape (c) comprend le calcul par les moyens de traitement de données (21, 31, 41) d'une accélération attendue en fonction de ladite vitesse angulaire mesurée et du bras de levier, ledit intervalle temporel de ladite marche du piéton (1) pendant lequel ladite extrémité distale (11) dudit membre inférieur (10) est en contact du sol étant déterminé en fonction de l'accélération mesurée et de ladite accélération attendue.

6. Procédé selon la revendication 5, dans lequel ledit intervalle temporel de ladite marche du piéton (1) pendant lequel ladite extrémité distale (11) dudit membre inférieur (10) est en contact du sol est déterminé à l'étape (c) comme celui pendant lequel un écart entre l'accélération mesurée et l'accélération attendue est inférieur à un seuil prédéterminé.

7. Procédé selon l'une des revendications 5 et 6, dans lequel ladite accélération attendue est donnée par la formule

$$\overrightarrow{\gamma_{att}} = -\vec{g} + \frac{d\vec{\omega}}{dt} \wedge \vec{r} + \vec{\omega} \wedge \vec{\omega} \wedge \vec{r},$$ où $\vec{\omega}$ est la vitesse angulaire mesurée, $\vec{r}$ le bras de levier et $\vec{g}$ l'accélération de la pesanteur.

8. Procédé selon l'une des revendications 1 à 4, dans lequel ledit intervalle temporel de ladite marche du piéton (1) pendant lequel ladite extrémité distale (11) dudit membre inférieur (10) est en contact du sol est déterminé à l'étape (c) comme celui pendant ou après lequel l'accélération et/ou la vitesse angulaire mesurées correspondent à un motif prédéterminé représentatif du contact de l'extrémité (11) du membre inférieur (10).

9. Procédé selon l'une des revendications 1 à 8, dans lequel la correction d'une vitesse estimée dudit membre inférieur (10) à l'étape (c) comprend la mise en œuvre d'un filtre estimateur d'état linéaire ou non linéaire.

**10.** Procédé selon l'une des revendications 1 à 9, comprenant une étape (a0) préalable de détermination dudit bras de levier.

**11.** Procédé selon la revendication 10, dans lequel le bras de levier est déterminé en minimisant l'écart entre l'accélération mesurée et une accélération attendue fonction de ladite vitesse angulaire mesurée et du bras de levier, lors d'un intervalle temporel prédéterminé de ladite marche du piéton (1) pendant lequel ladite extrémité distale (11) dudit membre inférieur (10) est en contact du sol.

**12.** Procédé selon les revendications 9 et 10 en combinaison, dans lequel ladite détermination du bras de levier comprend l'intégration du bras de levier au filtre.

**13.** Equipement (2, 3, 4) d'estimation du mouvement d'un piéton (1) en marche comprenant des moyens de traitement de données (21, 31, 41) configurés pour mettre en œuvre :

- Un module de réception d'une accélération et d'une vitesse angulaire d'un membre inférieur (10) dudit piéton (1) mesurées par des moyens de mesure inertielle (20) solidaires dudit membre inférieur (10) et disposés de sorte à présenter sensiblement un mouvement de rotation par rapport à une extrémité distale (11) dudit membre inférieur (10) au moins lorsque ladite extrémité distale (11) du membre inférieur (10) est en contact avec le sol ;
- Un module d'estimation d'une vitesse dudit membre inférieur (10) en fonction de ladite accélération et de ladite vitesse angulaire mesurées ;
- Un module de détermination d'un intervalle temporel de ladite marche du piéton (1) pendant lequel ladite extrémité distale (11) dudit membre inférieur (10) est en contact du sol en fonction de l'accélération mesurée, de la vitesse angulaire mesurée, et d'un bras de levier entre les moyens de mesure inertielle (20) et ladite extrémité distale (11) ;
- Un module de calcul dans ledit intervalle temporel déterminé d'une vitesse attendue dudit membre inférieur (10) en fonction de ladite vitesse angulaire mesurée et dudit bras de levier ;
- Un module de correction dans ledit intervalle temporel de la vitesse estimée dudit membre inférieur (10) en fonction de la vitesse attendue ;
- Un module d'estimation du mouvement du piéton (1) en fonction de la vitesse corrigée dudit membre inférieur (10).

**14.** Produit programme d'ordinateur comprenant des instructions de code pour l'exécution d'un procédé d'estimation du mouvement d'un piéton (1) en marche selon l'une des revendications 1 à 12, lorsque ledit programme est exécuté sur un ordinateur.

**15.** Moyen de stockage lisible par un équipement informatique sur lequel un produit programme d'ordinateur comprend des instructions de code pour l'exécution d'un procédé d'estimation du mouvement d'un piéton (1) en marche selon l'une des revendications 1 à 12.

**Patentansprüche**

**1.** Verfahren zum Schätzen der Bewegung eines gehenden Fußgängers (1), das Schritte umfasst des:

(a) Messens einer Beschleunigung und einer Winkelgeschwindigkeit der unteren Extremität (10) durch Trägheitsmessmittel (20), die fest mit einer unteren Extremität (10) des Fußgängers (1) verbunden und so angeordnet sind, dass sie im Wesentlichen eine Drehbewegung in Bezug auf ein distales Ende (11) der unteren Extremität (10) mindestens dann aufweisen, wenn sich das distale Ende (11) der unteren Extremität (10) mit dem Boden in Kontakt befindet;
(b) Schätzens einer Geschwindigkeit der unteren Extremität (10) durch Datenverarbeitungsmittel (21, 31, 41) in Abhängigkeit von der Beschleunigung und der Winkelgeschwindigkeit, die gemessen wurden;
(c) Bestimmens eines Zeitintervalls des Gangs des Fußgängers (1), während dem sich das distale Ende (11) der unteren Extremität (10) mit dem Boden in Kontakt befindet, durch die Datenverarbeitungsmittel (21, 31, 41) in Abhängigkeit von der gemessenen Beschleunigung, der gemessenen Winkelgeschwindigkeit, und einem Hebelarm zwischen den Trägheitsmessmitteln (20) und dem distalen Ende (11);
(d) in dem bestimmten Zeitintervall:

◦ Berechnens einer erwarteten Geschwindigkeit der unteren Extremität (10) durch die Datenverarbeitungsmittel (21, 31, 41) in Abhängigkeit von der gemessenen Winkelgeschwindigkeit und dem Hebelarm;
◦ Korrigierens der geschätzten Geschwindigkeit der unteren Extremität (10) in Abhängigkeit von der erwarteten Geschwindigkeit;

(e) Schätzens der Bewegung des Fußgängers (1) durch die Datenverarbeitungsmittel (21, 31, 41) in Abhängigkeit von der korrigierten Geschwindigkeit der unteren Extremität (10).

2. Verfahren nach Anspruch 1, wobei die Geschwindigkeit der unteren Extremität (10) durch Integration der gemessenen Beschleunigung, im terrestrischen Bezugssystem ausgedrückt, in Abhängigkeit von der gemessenen Winkelgeschwindigkeit geschätzt wird, und die Bewegung der unteren Extremität (10) durch Integration der geschätzten Geschwindigkeit geschätzt wird.

3. Verfahren nach einem der Ansprüche 1 und 2, wobei die erwartete Geschwindigkeit durch die Formel $\vec{v_{att}} = \vec{\omega} \wedge \vec{r}$ gegeben ist, wobei $\vec{\omega}$ die gemessene Winkelgeschwindigkeit und $\vec{r}$ der Hebelarm ist.

4. Verfahren nach einem der Ansprüche 1 bis 3, wobei die Trägheitsmessmittel (20) zwischen einem Knöchel (12) und einem Knie (13) an der unteren Extremität (10) angeordnet sind.

5. Verfahren nach einem der Ansprüche 1 bis 4, wobei der Schritt (c) das Berechnen einer erwarteten Beschleunigung durch die Datenverarbeitungsmittel (21, 31, 41) in Abhängigkeit von der gemessenen Winkelgeschwindigkeit und dem Hebelarm umfasst, wobei das Zeitintervall des Gangs des Fußgängers (1), während dem sich das distale Ende (11) der unteren Extremität (10) mit dem Boden in Kontakt befindet, in Abhängigkeit von der gemessenen Beschleunigung und der erwarteten Beschleunigung bestimmt wird.

6. Verfahren nach Anspruch 5, wobei das Zeitintervall des Gangs des Fußgängers (1), während dem sich das distale Ende (11) der unteren Extremität (10) mit dem Boden in Kontakt befindet, im Schritt (c) als dasjenige bestimmt wird, während dem eine Abweichung zwischen der gemessenen Beschleunigung und der erwarteten Beschleunigung kleiner ist als eine vorbestimmte Schwelle.

7. Verfahren nach einem der Ansprüche 5 und 6, wobei die erwartete Beschleunigung durch die Formel $$\vec{\gamma_{att}} = -\vec{g} + \frac{d\vec{\omega}}{dt} \wedge \vec{r} + \vec{\omega} \wedge \vec{\omega} \wedge \vec{r}$$ gegeben ist, wobei $\vec{\omega}$ die gemessene Winkelgeschwindigkeit, $\vec{r}$ der Hebelarm und $\vec{g}$ die Schwerebeschleunigung ist.

8. Verfahren nach einem der Ansprüche 1 bis 4, wobei das Zeitintervall des Gangs des Fußgängers (1), während dem sich das distale Ende (11) der unteren Extremität (10) mit dem Boden in Kontakt befindet, im Schritt (c) als dasjenige bestimmt wird, während oder nach dem die Beschleunigung und/oder die Winkelgeschwindigkeit, die gemessen wurden, einem vorbestimmten Muster entsprechen, das für den Kontakt des Endes (11) der unteren Extremität (10) repräsentativ ist.

9. Verfahren nach einem der Ansprüche 1 bis 8, wobei das Korrigieren einer geschätzten Geschwindigkeit der unteren Extremität (10) im Schritt (c) das Implementieren eines linearen oder nichtlinearen Zustandsschätzfilters umfasst.

10. Verfahren nach einem der Ansprüche 1 bis 9, das einen vorausgehenden Schritt (a0) des Bestimmens des Hebelarms umfasst.

11. Verfahren nach Anspruch 10, wobei der Hebelarm unter Minimieren der Abweichung zwischen der gemessenen Beschleunigung und einer erwarteten Beschleunigung, die von der gemessenen Winkelgeschwindigkeit und dem Hebelarm abhängig ist, während eines vorbestimmten Zeitintervalls des Gangs des Fußgängers (1) bestimmt wird, während dem sich das distale Ende (11) der unteren Extremität (10) mit dem Boden in Kontakt befindet.

12. Verfahren nach den Ansprüchen 9 und 10 in Kombination, wobei das Bestimmen des Hebelarms die Integration des Hebelarms in den Filter umfasst.

13. Ausrüstung (2, 3, 4) zum Schätzen der Bewegung eines gehenden Fußgängers (1), die Datenverarbeitungsmittel (21, 31, 41) umfasst, die dafür konfiguriert sind, zu implementieren:

- ein Modul zum Empfangen einer Beschleunigung und einer Winkelgeschwindigkeit einer unteren Extremität (10) des Fußgängers (1), die durch Trägheitsmessmittel (20) gemessen werden, welche fest mit der unteren Extremität (10) verbunden und so angeordnet sind, dass sie im Wesentlichen eine Drehbewegung in Bezug auf ein distales Ende (11) der unteren Extremität (10) mindestens dann aufweisen, wenn sich das distale Ende (11) der unteren Extremität (10) mit dem Boden in Kontakt befindet;
- ein Modul zum Schätzen einer Geschwindigkeit der unteren Extremität (10) in Abhängigkeit von der Beschleunigung und der Winkelgeschwindigkeit, die gemessen wurden;
- ein Modul zum Bestimmen eines Zeitintervalls des Gangs des Fußgängers (1), während dem sich das distale Ende (11) der unteren Extremität (10) mit dem Boden in Kontakt befindet, in Abhängigkeit von der gemessenen Beschleunigung, der gemessenen Winkelgeschwindigkeit, und einem Hebelarm zwischen den Trägheitsmessmitteln (20) und dem distalen Ende (11);
- ein Modul zum Berechnen, in dem bestimmten Zeitintervall, einer erwarteten Geschwindigkeit der unteren Extremität (10) in Abhängigkeit von der gemessenen Winkelgeschwindigkeit und dem Hebelarm;
- ein Modul zum Korrigieren, in dem Zeitintervall, der geschätzten Geschwindigkeit der unteren Extremität (10) in Abhängigkeit von der erwarteten Geschwindigkeit;
- ein Modul zum Schätzen der Bewegung des Fußgängers (1) in Abhängigkeit von der korrigierten Geschwindigkeit der unteren Extremität (10).

14. Computerprogrammprodukt, das Codeanweisungen umfasst für das Ausführen eines Verfahrens zum Schätzen der Bewegung eines gehenden Fußgängers (1) nach einem der Ansprüche 1 bis 12, wenn das Programm auf einem Computer ausgeführt wird.

15. Speichermittel, das von einer IT-Ausrüstung gelesen werden kann, auf dem ein Computerprogrammprodukt Codeanweisungen für das Ausführen eines Verfahrens zum Schätzen der Bewegung eines gehenden Fußgängers (1) nach einem der Ansprüche 1 bis 12 umfasst.

**Claims**

1. Method for estimating the movement of a walking pedestrian (1) comprising steps of:

   (a) Measuring, by inertial-measurement means (20) rigidly connected to a lower limb (10) of said pedestrian (1) and positioned in such a way as to have substantially a movement of rotation with respect to a distal end (11) of said lower limb (10) at least when said distal end (11) of the lower limb (10) is in contact with the ground, an acceleration and an angular speed of said lower limb (10);
   (b) Estimating, by data-processing means (21, 31, 41), a speed of said lower limb (10) according to said measured acceleration and said measured angular speed;
   (c) Determining, by the data-processing means (21, 31, 41), a time interval of said walking of the pedestrian (1) during which said distal end (11) of said lower limb (10) is in contact with the ground according to the measured acceleration, the measured angular speed, and a moment arm between the inertial-measurement means (20) and said distal end (11);
   (d) In said determined time interval:

      ◦ Calculating, by the data-processing means (21, 31, 41), an expected speed of said lower limb (10) according to said measured angular speed and said moment arm;
      ◦ Correcting the estimated speed of said lower limb (10) according to the expected speed;

   (e) Estimating, by the data-processing means (21, 31, 41), the movement of the pedestrian (1) according to the corrected speed of said lower limb (10).

2. Method according to claim 1, wherein the speed of said lower limb (10) is estimated by integration of the measured acceleration expressed in the terrestrial reference frame according to the measured angular speed, and the movement of said lower limb (10) is estimated by integration of the estimated speed.

3. Method according to one of claims 1 and 2, wherein said expected speed is given by the formula $\vec{v_{att}} = \vec{\omega} \wedge \vec{r}$, where $\vec{\omega}$ is the measured angular speed and $\vec{r}$ is the moment arm.

4. Method according to one of claims 1 to 3, wherein said inertial-measurement means (20) are positioned on said lower limb (10) between an ankle (12) and a knee (13).

5. Method according to one of claims 1 to 4, wherein step (c) comprises the calculation, by the data-processing means (21, 31, 41), of an expected acceleration according to said measured angular speed and the moment arm, said time interval of said walking of the pedestrian (1) during which said distal end (11) of said lower limb (10) is in contact with the ground being determined according to the measured acceleration and said expected acceleration.

6. Method according to claim 5, wherein said time interval of said walking of the pedestrian (1) during which said distal end (11) of said lower limb (10) is in contact with the ground is determined in step (c) as that during which a difference between the measured acceleration and the expected acceleration is less than a predetermined threshold.

7. Method according to one of claims 5 and 6, wherein said expected acceleration is given by the formula

$$\overrightarrow{\gamma_{att}} = -\vec{g} + \frac{d\overrightarrow{\omega}}{dt} \wedge \vec{r} + \overrightarrow{\omega} \wedge _{\overrightarrow{\omega} \wedge \vec{r}},$$ where $\vec{\omega}$ is the measured angular speed, $\vec{r}$ the moment arm and $\vec{g}$ the acceleration of gravity.

8. Method according to one of claims 1 to 4, wherein said time interval of said walking of the pedestrian (1) during which said distal end (11) of said lower limb (10) is in contact with the ground is determined in step (c) as that during which or after which the measured acceleration and/or the measured angular speed correspond to a predetermined pattern representative of the contact of the end (11) of the lower limb (10).

9. Method according to one of claims 1 to 8, wherein the correction of an estimated speed of said lower limb (10) in step (c) comprises the implementation of a filter that estimates a linear or non-linear state.

10. Method according to one of claims 1 to 9, comprising a prior step (a0) of determining said moment arm.

11. Method according to claim 10, wherein the moment arm is determined by minimising the difference between the measured acceleration and an expected acceleration dependent on said measured angular speed and the moment arm, during a predetermined time interval of said walking of the pedestrian (1) during which said distal end (11) of said lower limb (10) is in contact with the ground.

12. Method according to claims 9 and 10 in combination, wherein said determination of the moment arm comprises the integration of the moment arm into the filter.

13. Piece of equipment (2, 3, 4) for estimating the movement of a walking pedestrian (1) comprising data-processing means (21, 31, 41) configured to implement:

    - A module for receiving an acceleration and an angular speed of a lower limb (10) of said pedestrian (1) measured by inertial-measurement means (20) rigidly connected to said lower limb (10) and positioned in such a way as to have substantially a movement of rotation with respect to a distal end (11) of said lower limb (10) at least when said distal end (11) of the lower limb (10) is in contact with the ground;
    - A module for estimating a speed of said lower limb (10) according to said measured acceleration and said measured angular speed;
    - A module for determining a time interval of said walking of the pedestrian (1) during which said distal end (11) of said lower limb (10) is in contact with the ground according to the measured acceleration, the measured angular speed, and a moment arm between the inertial-measurement means (20) and said distal end (11);
    - A module for calculating, in said determined time interval, an expected speed of said lower limb (10) according to said measured angular speed and said moment arm;
    - A module for correcting, in said time interval, the estimated speed of said lower limb (10) according to the expected speed;
    - A module for estimating the movement of the pedestrian (1) according to the corrected speed of said lower limb (10).

14. Computer program product comprising code instructions for the execution of a method for estimating the movement of a walking pedestrian (1) according to one of claims 1 to 12, when said program is executed on a computer.

15. Storage means readable by a piece of computer equipment on which a computer program product comprises code instructions for the execution of a method for estimating the movement of a walking pedestrian (1) according to one of claims 1 to 12.

FIG. 1

FIG. 2

FIG. 3a

FIG. 3b

**FIG. 4a**

FIG. 4b

## RÉFÉRENCES CITÉES DANS LA DESCRIPTION

**Documents brevets cités dans la description**

- US 2013123665 A

- EP 1137911 A

**Littérature non-brevet citée dans la description**

- **FOXLIN, E.** Pedestrian tracking with shoe-mounted inertial sensors. Computer Graphics and Applications. *IEEE Computer Graphics and Applications,* Novembre 2005, vol. 25 (6), 38-46